# EUROPEAN PATENT SPECIFICATION

(11) **EP 2 175 382 B1**
(45) Date of publication and mention of the grant of the patent: **22.03.2017**
(21) Application number: 08166266.0
(22) Date of filing: 09.10.2008
(51) Int. Cl.: G06F 17/30, H04L 29/08

(54) **Methods, module and network server for providing information to a mobile phone**
Verfahren, Modul und Netzwerkserver zur Bereitstellung von Informationen an Mobiltelefone
Procédés, module et serveur de réseau pour la fourniture d'informations à un téléphone mobile

(43) Date of publication of application: 14.04.2010
(73) Proprietor: Vodafone GmbH, 40549 Düsseldorf (DE)
(72) Inventor: Weisscher, Alard, 6231, LE Meerssen (NL); Eschenauer, Laurent, Ougrée, 4102 (BE)
(74) Representative: Cullinane, Marietta Bettina

(56) References cited:
- EP-A- 1 720 305
- FR-A- 2 835 686
- GB-A- 2 406 996
- US-A1- 2008 081 662

## Description

The present invention relates to a method for providing information to a mobile phone.

Information which is being made available at a computer is for example information contained in a webpage on the Internet. This information is provided from the network server which hosts the webpage to a computer by means of a browser which is installed on the computer. The thus displayed information can be viewed by the user. However, the usage of the displayed information for the user is limited.

When a user visits a webpage, for example in order to retrieve information about a hotel, this information will be displayed to him. Generally, this displayed information contains a description that may include pictures, contact information such as email address and phone number of the hotel. To date a user can only use this information on the computer where the browser is installed. For example, an email may be sent to the hotel by using the email from the hotel in the email program installed on the computer. Also the pictures displayed on a webpage can only be saved to the hard disk or sent from the computer via email. Any usage of information provided on a homepage beyond the immediate usage on the computer generally requires insertion of special code into the webpage and/or time consuming interaction of the user, such as opening applications, entering data, etc.

Some of the information displayed on a webpage may, however, be more efficiently used outside the confined limitations of a computer running a browser application. In particular the information may be used more effectively on a mobile phone than at a computer. To date an integration of a mobile phone in today's desktop Internet does not exist.

US 2008/ 081662 A1 describes an approach, wherein a method for initiating a communication from an arbitrary document is suggested. According to that approach, a document which may be a webpage is parsed for any data or information that comprises contact information. A phone number in a web page may automatically be converted into an activatable link, icon or button. Once activated by the user, a different layer may be rendered on top of the webpage. The layer may comprise different options such as call, SMS or contact. When a user clicks on a contact link, a command is automatically sent from the user's device or browser plug-in to the user's mobile device that executes a program to instantiate the communication to a target device or user. One disadvantage of this approach is that, it is mandatory to have a respective software or program installed on the mobile device.

EP1 720 305 A1 relates to a method for allowing a mobile subscriber to send multimedia content from a computer to another mobile telephony subscriber. The multimedia content according to that document terminates at the mobile terminal. This means, that command for an additional action, such as a further transmission to another mobile terminal is delivered to the mobile terminal together with the MMS.

The problem to be solved by the present invention is thus to provide a solution that allows for convenient usage of information which is made available by a webpage outside of the confined limits of a computer, in particular at a mobile phone.

The present invention relates to a method for providing information from a webpage displayed on a computer to a mobile phone. The features of this method are given in claim 1.

Information according to the present invention is data or content which at least partially is being made available at a computer from a web server, which will hereinafter also be referred to as the hosting web server. In particular, the information according to the present invention is included in the code of the webpage which is transmitted from the hosting web server to the computer where the webpage is to be displayed. The code of the webpage may for example be in HTML code, in an Active Server Page structure (ASP) and/or in a Frame/ iFrame (inline frame) structure. Also other languages or structures may be used. A webpage will hereinafter also be referred to as a website. The computer on which the webpage is displayed may be a PC, a laptop or any other computing device capable of executing a browser for webpages. The mobile phone according to the present invention is a terminal device of a mobile radio network, preferably of a cellular mobile network. The browser unit will hereinafter also be referred to as a browser. The browser is an application or software for processing and rendering content from the Internet, in particular for rendering webpages.

The browser module according to the present invention can also be referred to as a browser extension. The module will be installed on the same computer as the browser itself. It may be installed as an add-on or plug-in module. This means even for a browser which is already installed on the computer, the module can subsequently be installed and activated on the computer.

Analysing a webpage according to the present invention may be parsing, screening, filtering or other suitable processing of code of the webpage. The webpage can be analysed before the display at the computer or during display. For example, the code received from a webserver at the computer may be analysed or parsed during transmission to the computer. During the analysis of the webpage or subsequently thereto, information which has been defined or set within the browser module can be identified. The defined or set information will hereinafter be referred to as specific information. The definition or setting of the information may be realized by determining a string of code, a field or a flag. The code of the webpage may then be screened, filtered or be otherwise suitably processed to identify the respective string, field or flag. The identification of specific information according to the present invention may lead to a change of display of the actual webpage. In particular, the identified specific information may be highlighted. In addition, to the mere highlighting, the browser module may reformate the identified specific information into a special link, which can be click-enabled, which means a user can click on it in order to view the option list. The option list of actions will include options for the identified specific information. The option list will include actions which may be performed with the specific information at a mobile phone. For different pieces of information, in particular information that differs in terms of the definition or setting which has to be used to retrieve or identify the information from the webpage, different options may thus be included in the list. The option list is therefore preferably generated dependent on the identified specific information and may be generated separately for different pieces of information.

Once an option from the list is being selected, a request will be generated at the browser module. This request contains at least the identified specific information and an indication of the selected action to be performed with the information at the mobile phone. The thus generated request will be sent to a network server by the browser module for processing and for transmission of the information to the mobile phone. The network server to which the request is sent will also be referred to as a backend web server.

By analysing a webpage for specific information, associating an action with the information and providing the information together with at least a indicia of the action to a mobile phone. The secluded area of a computer communicating with a hosting webserver via the Internet can be broadened. In particular, the functionalities such as the native phone functions of a mobile phone can be used from a computer with information retrieved from a webpage. The code of the webpage does not have to be changed and thus information from all webpages can be processed according to the inventive method and can thus be used at a mobile phone. In addition, an interaction of the user with the computer or the mobile phone to the extent that a telephone number or other complex information has to be entered for each action, can be avoided. The present invention therefore allows for a simple way to enable actions to be performed with information from a webpage which has hitherto not been possible.

The specific information which is identified within the webpage may preferably be a telephone number. A telephone number may be identified by a setting or definition within the browser module to search or scan for a string of code, where a number of a minimal length is present. Alternatively, or in addition a plus symbol before the number may be used as a setting to identify telephone numbers. Also other approaches, where the webpage, in particular the code of the webpage, is searched or scanned for search terms such as "telephone number" or "tel.:" may be used. In the latter case, the identified specific information will be the number following the search term.

The settings or definitions for identifying specific information within the browser module may be preset by the manufacturer. It is, however, also possible that the settings or definitions are entered by a user when installing the browser module or at a later stage. In case of a presetting the settings or definitions by the manufacturer, preferably a list of different settings or definitions is provided and the user may choose from the list when setting up the browser module or when needed.

By using a telephone number as specific information which is to be identified and transmitted to a mobile phone, the native phone functions of the mobile phone, such as call initiation or sending of messages such as SMS can be used as actions which may be offered in an option list.

Other information that could serve as the specific information according to the present invention includes hyperlinks or content. In the later case, the content may for example be a picture. Also this information can be used at a mobile telephone in a different way as on a computer. In particular, the mobility of the user will be increased as this information, once transferred to a mobile phone, will be available regardless of the current position of the user. Actions that may be associated with specific information which is a picture may for example be the saving of the picture as a wall paper at the mobile phone. Where the specific information is a hyperlink, this information can be used at the mobile phone to set a bookmark and thus to be able to access a site on the Internet fast from the mobile phone at a later stage.

According to one embodiment, a display of the option list is triggered by a selection action of the information by a user. This means that the option list may be generated once specific information has been identified. The option list will, however, only be displayed at the computer if the user selects the respective information. The selection of specific information by a user may be positioning the cursor over the position of the specific information. Preferably, the selection of specific information according to the present invention, however, is carried out by clicking or otherwise marking the specific information. The display of the option list according to the present invention is independent from the display of the webpage where the specific information is present. The display may for example be a pop-up window or a different page that opens upon selection of the specific information. The option list may also be integrated for display in an option list that is provided by the browser unit itself. Option lists generated by the browser itself in general do not relate to specific information, i.e. are of general nature, such as "show source code". In addition, option lists generated by the browser itself do not comprise options that relate to actions to be performed with information at a mobile phone. The options of the generic option list rather relate to actions to be performed on the computer itself, e.g. safe to hard disk. By including the display of an option list generated by the browser module into a generic option list, the user experience is improved, as only one list has to be displayed.

The network server which carries out the steps according to this method will also be referred to as a backend web server. By transmitting a command message which includes specific information selected from a webpage as well as an indication of the action to be performed with this specific information to the mobile phone a connection from the computer, where the webpage is being viewed, to the mobile phone can be established. Compared to other connections, such as physical connections (USB), proximity wireless (Bluetooth, Wi-Fi) the inventive connection uses very little battery power at the mobile phone, as only the command has to be received and the respective action has to be carried out.

The command message generated at the backend web server will be forwarded to a gateway, where it will be embedded into a gateway message and can thus be transmitted to the mobile phone via the mobile communication network to which the mobile phone is a terminal.

The selection of a gateway will be carried out in view of the intended delivery method of the command message to the mobile phone. Thereby, different phone capabilities can be considered with the present invention.

According to a preferred embodiment, the request received at the network server is generated according to the inventive method wherein the browser module analyses the webpage, identifies specific information, generates an option list, generates a request and transmits the request to a network server for processing and transmission to the mobile phone.

According to a preferred embodiment, the gateway for transmission to the mobile phone is a SMS gateway, an MMS gateway or a WAP Push gateway.

By allowing the command message to be transmitted via one of these gateways, the best transmission method can be selected. If the mobile phone supports WAP push for example, the command message may be sent via the WAP push gateway and may be embedded in a WAP push message. In this case for example WTAI tags may be used to trigger the intended action at the mobile phone. If the mobile phone, however, does not support WAP push the command message may for example be sent via a SMS gateway. As all mobile phones are capable of receiving and processing SMS messages, the inventive method can be carried out with all types of mobile phones.

According to one embodiment, the method comprises the step of obtaining the telephone number of the mobile telephone to which the command is to be transmitted by accessing a database and matching entries of the database with data received with the request from the computer.

The telephone number of the mobile phone to which the specific information is to be transmitted may be included in the request which is generated by the browser module on the computer. As this request will, however, be transmitted via an unsecured Internet connection, it may, however, be preferable to only associate the telephone number to the request and subsequently to the command message after the request has been received at the backend web server.

The telephone number of the mobile phone of the user may be entered by the user when the browser module is installed on the computer. The entry is preferably made at a network server, where the browser module application is managed. This network server will hereinafter also be referred to as the frontend web server. Upon entry of the telephone number of the mobile phone of the user, the frontend web server may store this information in the browser module to be downloaded and/or in a database. The database in which this information is being stored, is accessible from both the frontend web server and the backend web server. The telephone number may also be entered at the computer in the configuration area of the browser unit. In either case, the user of the present invention thus only has to enter his phone number once.

Disclosed is furthermore a module for a browser unit of a computer. The module is characterized in that the module comprises means for analysing a webpage to be displayed by the browser unit at the computer to identify specific information in the webpage, means for generating and displaying at the computer an option list of actions to be performed with the information at a mobile phone depending on the identified specific information, wherein the actions are the native phone functions or call initiation or sending of messages or the action is the storing of the specific information at the mobile phone, means for generating a request comprising the identified specific information and an indication of the intended action to be performed with the specific information at a mobile phone and means for sending the request to a network server for generating a command for a mobile phone to process the information according to the intended action, and for transmission of the command to the mobile phone via a selected gateway.

By providing means for analysing and identifying specific information, means for generating options of actions to be performed with the specific information as well as means for generating a request based on the output of these means in a browser module a connection from a computer to a mobile phone can be realized. This connection will allow the usage of information displayed on a webpage at the computer at a mobile phone.

Furthermore, a network server for managing transmission of information from a webpage from a computer to a mobile phone is disclosed. The network server is characterized in that the network server comprises means for receiving a request from a browser unit at a computer, wherein the request comprises specific information and an indication of the intended action to be preformed with the specific information at the mobile phone, wherein the intended action is the native phone function of call initiation or sending of messages or the action is the storing of the specific information at the mobile phone, means for generating a command for a mobile phone to process the specific information according to the intended action of the request, means for selecting a gateway for transmission of the command to the mobile phone and means for forwarding the command to the gateway for transmission to the mobile phone.

This network server will hereinafter also be referred to as the backend web server.

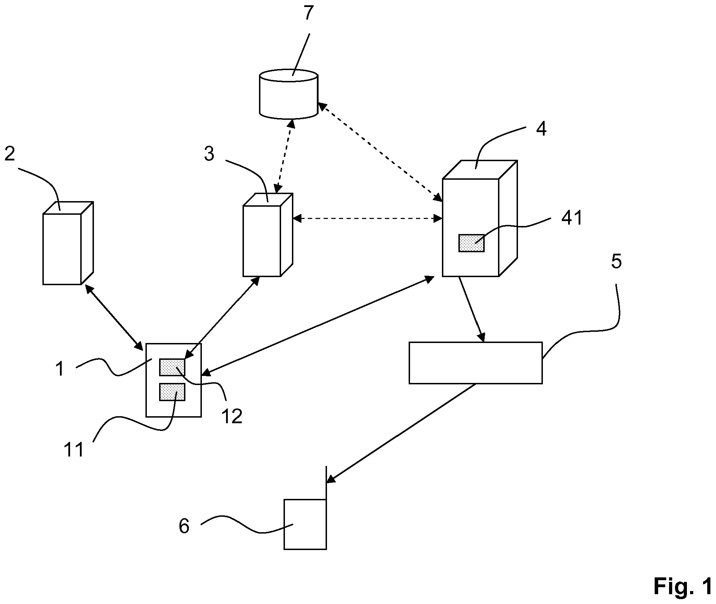

The invention will now be described again with reference to the enclosed Figure 1 which shows a schematic depiction of a system for use in the present invention.

The system comprises the following components: A computer or PC 1 is provided which has a browser unit 11 installed thereon. The computer can communicate with a hosting web server 2, a frontend web server 3 and a backend web server 4. The frontend web server 3 and the backend web server 4 can access a database 7. The backend web server 4 can further communicate with a gateway or mobile gateway 5. It should be noted that more than just one gateway 5 may be provided, for clarity sake, however, only one gateway 5 is depicted. The gateway 5 servers for communication with a mobile phone 6.

A user wanting to use the present invention, may access the frontend web server 3 via his PC 1. At the frontend web server 3 the browser module of the present invention is managed. In particular the browser module 12 is available for download. Also settings in the browser module 12 may be made via the connection of the PC 1 to the frontend web server 3. Once the user has downloaded the browser module 12 to his PC 1 it can be installed.

If the user then opens a webpage with his browser 11 from a hosting web server 2, the webpage will be displayed to the user at the PC 1 in his browser 11. In this system, the browser module 12 may use a native JavaScript interpreter, XML Parser to read and search the code of the webpage for specific information. The specific information is defined in the browser module 12. The specific information may for example be phone numbers. If the browser module 12 identifies any phone numbers in the web content the phone numbers will be highlighted and a phone link will be appended into the original web content in a data persistence engine. Also actions which are to be performed with the phone number at a mobile phone are determined.

For example, in a homepage of a restaurant, the telephone number of the restaurant may be identified as specific information. The user wanting to contact the restaurant may then put his cursor over the telephone number or click on the telephone number. Thereby, a pop-up window will be opened. The pop-up window may comprise the options: "call", "sms", "add contact".

In a first example the user selects the option "call", by clicking on this option in the display of the option list in the pop-up window. This selection of the "call" option triggers the browser module 12 to generate a request which is sent to the backend web server 4. The communication between the browser module 12 and the backend web server 4 can be carried out via the processing servers IP address using the current Internet connection from the PC 1.

The backend web server 4 receives the request and processes it. In particular, the backend web server 4 may carry out an authentication step. If the request which is transmitted from the PC 1, in particular from the browser module 12 to the backend web server 4 does not include the telephone number of the user to which the information is to be transmitted, the backend web server 4 will retrieve this telephone number. The retrieval of this telephone number is preferably done by the backend web server 4 accessing either the frontend web server 3 or even more preferably by accessing a database 7, to which the frontend web server 3 has transmitted data provided when the user registered, downloaded the browser module 12 or maintained the user profile.

With the telephone number of the user a command generator 41 at the backend web server 4 then generates a command message to be transmitted to the mobile phone 6 of the user. The command message will include the specific information selected by the user at the webpage, i.e. the telephone number of the restaurant. In addition, the action selected from the option list, namely "call", will be included in the command message. WTAI tags may be used in the command message to trigger the make call function at the mobile phone. The tag may be "wtai://wp/mc;<Phone number>" or "tel:<Phone number>". The tag will be embedded into a WAP push message and forwarded to the gateway 5. The backend web server 4 can connect to the gateway 5 by secured socket, web interface or a http get command. The security of the connection between backend web server 4 component and the gateway 5 is less crucial, since these components are located inside the network of the mobile operator.

The thus generated command message will be sent to the user's mobile phone 6. the command message will be generated in such a way, that upon receipt of the command message at the mobile phone 6 or at least after confirmation of the user at the mobile phone 6, the native phone function of initiating a call will be invoked and the telephone number which had been derived from the webpage, i.e. the telephone number of the restaurant will be dialled.

In a second example the user selects the option "SMS" at the pop-up window at the PC 1. Thereby a respective request is generated and sent to the backend web server 4 from the browser module 12. Again, the telephone number of the mobile phone of the user is either received with the request or retrieved by backend web server 4. The command message generated in this case will be sent to the mobile phone and will be in such a form that either the SMS function is invoked immediately or at least upon confirmation by the user at the mobile phone. The user can then write an appropriate SMS and this SMS will be sent to the number originally retrieved from the webpage at the PC, i.e. to the restaurant.

The command message in this case may comprise a tag "sms:<Phone number>" to force the phone jump to the "create new SMS function". The "Send to" field is automatically filed in with the number retrieved from the webpage.

In the third example the user selects the option "add contact". In this case the specific information, i.e. the telephone number of the restaurant may be transmitted to the mobile phone 6. In this last example, the specific information which is being transmitted to the mobile phone 6 may also comprise additional information such as the name and address of the restaurant. This information may be formatted to be a contact format such as vCard before being sent to the mobile phone 6. The formatting of the specific information may be carried out at the browser module 12 or at the backend web server 4 when the command message is generated. Once the message is received at the mobile phone 6 the telephone number and any other specific information such as the name and address may be added to the address book at the user's mobile phone 6 immediately or upon confirmation from the user.

The tag that may be used in the command message for this case may be wtai://wp/ap;<Phone number>;<Name>. If the information is to be transmitted as a vCard, a binary SMS can be used rather then a WAP push message.

A browser module which may also be referred to as an 'extension plug-in' for a web browser is described. The extension plug-in enables the browser for example to detect phone numbers in web pages. The phone numbers can be detected in any web page, without the need to add special code in the web page. In addition, the phone number can be associated with a set of user actions. This set of user actions comprises call, send sms, add contact). When the user performs an action, the appropriate request is sent to a backend server on the internet that send to the user phone one or more commands using either sms, mms or wap-push messages, depending on the action and the user's phone model. The user phone can then process the command without the need to install any additional software.

For telephone numbers as specific information the disclosed system is architecture around the following components:
An extension for the desktop browser to detect phone numbers and trigger commands
A frontend web server where the user configure their account and download the extension
A backend web server to manage commands or requests generated by the extension and trigger the appropriate phone commands through SMS, MMS, and Wap Push
A set of gateways to manage SMS, MMS and Wap Push messages
A mobile phone which receives the command and generates the appropriate actions

The present invention is advantageous in that nothing has to be installed besides the browser extension, in particular no application has to be downloaded to the mobile phone. In addition, the present invention can be used with every phone or phone model and every website.

## Claims

1. Method for providing information from a webpage displayed on a computer (1) to a mobile phone (6), wherein a browser module (12) of a browser unit (11) at a computer (1) carries out the steps of:
analysing a webpage which is to be displayed by the browser unit (11) identifying specific information within the webpage,
generating at the computer an option list of actions to be performed with the specific information at a mobile phone (6), wherein the actions are the native phone functions of call initiation or of sending of messages or the actions are storing of the specific information at the mobile phone (6),
upon selection of an option from the option list generating a request comprising the identified specific information and an indication of the selected action to be performed with the specific information,
sending the request to a network server (4) for processing and for transmission of the information and an indication of the selected action to the mobile phone (6); and
wherein the network server (4) upon receipt of the request carries out the steps of generating a command for a mobile phone (6) to process the information according to the intended action,
selecting a gateway (5) for transmission of the command to the mobile phone (6),
wherein the selection of the gateway (5) is carried out in view of the intended delivery method of the command message to the mobile phone and
forwarding the command to the gateway for transmission to the mobile phone (6).

2. Method according to claim 1, **characterized in that** the specific information is a telephone number, a hyperlink or content, in particular a picture.

3. Method according to claim 1 or 2, **characterized in that** the display of the option list is triggered by a selection action of the information by a user.

4. Method according to anyone of claims 1 to 3, **characterized in that** the option list is generated depending on the specific information.

5. Method according to claim 1, **characterized in that** the request received at the network server (4) is generated according to a method of one or more of claims 2 to 4.

6. Method according to anyone of claims 1 or 5, **characterized in that** the gateway (5) for transmission to the mobile phone is am SMS gateway, an MMS gateway or a WAP Push gateway.

7. Method according to any of claims 1 or 5 to 6, **characterized in that** the method comprises the step of obtaining the telephone number of the mobile telephone to which the command is to be transmitted by accessing a database (7) and matching entries of the database (7) with data received with the request from the computer.

## Patentansprüche

1. Verfahren zur Zurverfügungstellung von Informationen von einer Webseite, die auf einem Computer (1) angezeigt wird, an ein Mobiltelefon (6), wobei ein Browser-Modul (12) einer Browser-Einheit (11) an einem Computer (1) die Schritte ausführt:
Analysieren einer Webseite, die durch die Browser-Einheit (11) angezeigt werden soll
Identifizieren spezifischer Informationen in der Webseite
Erzeugen einer Optionsliste von Aktionen, die mit den spezifischen Informationen an einem Mobiltelefon (6) ausgeführt werden sollen, an dem Computer, wobei die Aktionen die nativen Telefonfunktionen der Anrufinitiierung oder des Sendes von Nachrichten sind oder die Aktionen sind das Speichern der spezifischen Informationen an dem Mobiltelefon (6),
bei Auswahl einer Option von der Optionsliste Generieren einer Anfrage, die die identifizierten spezifischen Informationen und eine Angabe der ausgewählten Aktion, die mit den spezifischen Informationen ausgeführt werden soll, umfasst,
Senden der Anfrage an einen Netzwerk-Server (4) zur Verarbeitung und zur Übermittlung der Informationen und einer Angabe der ausgewählten Aktion an das Mobiltelefon (6);
und
wobei der Netzwerk-Server (4) bei Empfang der Anfrage die Schritte ausführt des Generierens einer Anweisung für ein Mobiltelefon (6) dass die Informationen gemäß der beabsichtigten Aktion verarbeitet werden,
Auswählen eines Gateways (5) zur Übermittlung der Anweisung an das Mobiltelefon (6), wobei die Auswahl des Gateways (5) mit Hinblick auf die beabsichtigte Liefermethode der Anweisungsnachricht an das Mobiltelefon durchgeführt wird und
Weiterleiten der Anweisung an das Gateway zur Übermittlung an das Mobiltelefon (6).

2. Verfahren gemäß Anspruch 1, **dadurch gekennzeichnet, dass** die spezifische Information eine Telefonnummer, ein Hyperlink oder Inhalt, insbesondere ein Bild ist.

3. Verfahren gemäß Anspruch 1 oder 2, **dadurch gekennzeichnet, dass** die Anzeige der Optionsliste durch eine Auswahl-Aktion der Information durch einen Nutzer ausgelöst wird.

4. Verfahren gemäß einem der Ansprüche 1 bis 3, **dadurch gekennzeichnet, dass** die Optionsliste in Abhängigkeit der spezifischen Information generiert wird.

5. Verfahren gemäß Anspruch 1, **dadurch gekennzeichnet, dass** die Anfrage, die an dem Netzwerkserver (4) empfangen wird, gemäß einem Verfahren nach einem der oder mehreren der Ansprüche 2 bis 4 generiert wird.

6. Verfahren nach einem der Ansprüche 1 bis 5, **dadurch gekennzeichnet, dass** das Gateway (5) zur Übermittlung an das Mobiltelefon ein SMS Gateway, ein MMS Gateway oder ein WAP Push Gateway ist.

7. Verfahren nach einem der Ansprüche 1 oder 5 bis 6, **dadurch gekennzeichnet, dass** das Verfahren den Schritt des Beschaffens der Telefonnummer des Mobiltelefons, an das die Anweisung übermittelt werden soll, durch Zugriff auf eine Datenbank (7) und den Abgleich von Einträgen der Datenbank (7) mit Daten, die mit der Anfrage von dem Computer empfangen wurden, umfasst.

## Revendications

1. Procédé de fourniture d'informations depuis une page internet affichée sur un ordinateur (1) vers un téléphone mobile (6), dans lequel un module de navigation (12) d'une unité de navigation (11) sur un ordinateur (1) met en oeuvre les étapes de :
analyse d'une page internet qui doit être affichée par l'unité de navigation (11) en identifiant des informations spécifiques à l'intérieur de la page internet,
production, au niveau de l'ordinateur, d'une liste optionnelle d'actions à mettre en oeuvre avec les informations spécifiques au niveau du téléphone mobile (6), dans lequel les actions sont les fonctions téléphoniques natives d'initiation d'appel ou d'envoi de messages ou les actions sont destinées à mémoriser les informations spécifiques au niveau du téléphone mobile (6),
lors de la sélection d'une option à partir de la liste d'options, production d'une demande comprenant les informations spécifiques identifiées et une indication de l'action sélectionnée à mettre en oeuvre avec les informations spécifiques,
envoi de la demande à un serveur de réseau (4) en vue de son traitement et de manière à transmettre les informations et une indication de l'action sélectionnée au téléphone mobile (6) ; et
dans lequel le serveur de réseau (4), lors de la réception de la demande, met en oeuvre les étapes de
production d'une instruction pour un téléphone mobile (6) afin de traiter les informations en fonction de l'action souhaitée,
sélection d'une passerelle (5) afin d'assurer la transmission de l'instruction au téléphone mobile (6), où la sélection de la passerelle (5) est mise en oeuvre au vu du procédé de fourniture souhaité du message d'instruction au téléphone mobile et
transmission de l'instruction à la passerelle afin d'assurer sa transmission au téléphone mobile (6).

2. Procédé selon la revendication 1, **caractérisé en ce que** les informations spécifiques sont un numéro de téléphone, un lien hypertexte ou contenu, en particulier une image.

3. Procédé selon la revendication 1 ou 2, **caractérisé en ce que** l'affichage de la liste d'options est déclenché par une action de sélection des informations par un utilisateur.

4. Procédé selon l'une quelconque des revendications 1 à 3, **caractérisé en ce que** la liste d'options est produite en fonction des informations spécifiques.

5. Procédé selon la revendication 1, **caractérisé en ce que** la demande reçue au niveau du serveur de réseau (4) est produite conformément à un procédé selon une ou plusieurs des revendications 2 à 4.

6. Procédé selon l'une quelconque des revendications 1 ou 5, **caractérisé en ce que** la passerelle (5) destinée à assurer la transmission vers le téléphone mobile est une passerelle SMS, une passerelle MMS ou une passerelle WAP Push.

7. Procédé selon l'une quelconque des revendications 1 ou 5 à 6, **caractérisé en ce que** le procédé comprend l'étape d'obtention du numéro de téléphone du téléphone mobile auquel l'instruction doit être transmise par accès à une base de données (7) et de comparaison des entrées de la base de données (7) avec les données reçues avec la demande à partir de l'ordinateur.
